# DEMANDE DE BREVET EUROPEEN

(11) **EP 4 545 309 A1**
(43) Date de publication de la demande: **30.04.2025**
(21) Numéro de dépôt: 24208368.1
(22) Date de dépôt: 23.10.2024
(51) Int. Cl.: B41M 7/00

(54) **PROCÉDÉ D'IMPRESSION POUR RÉALISER UN SUPPORT PEINT**

(30) Priorité: 26.10.2023 FR 2311670
(71) Demandeur: Airbus SAS, 31700 Blagnac Cedex (FR); Airbus Operations (S.A.S.), 31060 Toulouse Cedex 9 (FR); AIRBUS Operations GmbH, 21129 Hamburg (DE)
(72) Inventeur: MORINIERE, Boris, 17300 ROCHEFORT (FR); BÜRGY, Olivier, 31060 TOULOUSE (FR); LELEU, Samuel, 31060 TOULOUSE (FR); MAHLER, Fabian, 21129 HAMBURG (DE)
(74) Mandataire: Cabinet Le Guen Maillet

(57) **Abrégé**

L'invention concerne un procédé d'impression (100) comprenant l'application (102) d'une encre sur un support, la gélification (104) de l'encre sous un rayonnement UV, la prise de vue (106) d'une image du décor et l'analyse (108) de l'image. Sans défaut, le procédé d'impression (100) continue par la dépose (110) d'un vernis et la solidification (112) sous un rayonnement UV. En cas de défaut, le procédé d'impression (100) continue par l'effaçage (114) de l'encre sur une zone de retrait entourant le défaut, la prise de vue (116) d'une image de la zone de retrait, l'analyse (118) de l'image pour déterminer la partie du décor à refaire, la réparation (120) de l'encre par dépose sur le support pour former la partie du décor à refaire, et le bouclage sur l'étape d'analyse (108).

Avec un tel procédé, l'encre formant le décor est partiellement durcie pour la figer et la corriger avant la pose du vernis.

## Description

### DOMAINE TECHNIQUE

La présente invention concerne un procédé d'impression pour réaliser un support peint, en particulier un panneau d'un aéronef à partir d'une encre qui durcit lorsqu'elle est exposée à un rayonnement ultra-violet (UV).

### ÉTAT DE LA TECHNIQUE ANTÉRIEURE

Dans un aéronef, le fuselage comporte un support comme le métal ou un matériau synthétique, et il est classiquement recouvert de peinture et/ou d'encre pour protéger le support et pour décorer l'aéronef par exemple avec les logos d'une compagnie aérienne. L'encre utilisée est généralement une encre qui est durcie par une exposition aux rayonnements UV.

Le procédé comporte ainsi une étape d'application d'une encre durcissable par UV sur le support, une étape d'application d'un vernis sur l'encre et une étape d'application des UV pour faire durcir l'encre et le vernis.

Même si un tel procédé donne de bons résultats, il peut arriver que l'encre migre avant le durcissement entraînant des défauts sur les dessins et logos.

Il est donc nécessaire de trouver un procédé d'impression qui améliore encore le rendu de l'encre appliquée sur le support.

Les documents WO-A-2017/165323 et WO-A-2022/038491 divulguent des procédés d'impression de l'état de la technique.

### EXPOSÉ DE L'INVENTION

Un objet de la présente invention est un procédé d'impression d'un décor sur un support, où l'encre est partiellement durcie et corrigée avant la pose du vernis et la solidification complète de l'ensemble.

À cet effet, est proposé un procédé d'impression d'un décor sur un support à l'aide d'une encre qui durcit sous rayonnement ultra-violet, ledit procédé d'impression comprenant :
- une étape d'application au cours de laquelle ladite encre est déposée sur le support pour former le décor,
- une étape de gélification au cours de laquelle l'encre ainsi appliquée est soumise à un rayonnement UV de faible intensité,
- une première étape de prise de vue au cours de laquelle au moins une première image du décor est prise,
- une première étape d'analyse au cours de laquelle la première image du décor ainsi prise est analysée pour déceler des éventuels défauts,
si aucun défaut n'est trouvé, le procédé d'impression continue par :
- une étape de dépose au cours de laquelle un vernis est déposé sur l'encre, et
- une étape de solidification au cours de laquelle l'encre et le vernis sont soumis à un rayonnement UV de forte intensité,
si un défaut est trouvé, le procédé d'impression continue par :
- une étape d'effaçage au cours de laquelle l'encre est retirée sur une zone de retrait entourant le défaut,
- une deuxième étape de prise de vue au cours de laquelle au moins une deuxième image de ladite zone de retrait est prise,
- une deuxième étape d'analyse au cours de laquelle ladite deuxième image est analysée pour déterminer la partie du décor à refaire,
- une étape de réparation au cours de laquelle ladite encre est déposée sur le support pour former ladite partie du décor à refaire, et
- une étape de retour au cours de laquelle le procédé d'impression boucle sur la première étape d'analyse.

Avec un tel procédé, l'encre formant le décor est partiellement durcie pour la figer et corrigée avant la pose du vernis.

Avantageusement, l'étape de solidification s'effectue juste avant l'étape de dépose du vernis sur l'encre.

Avantageusement, l'étape d'application, la première étape de prise de vue et la deuxième étape de prise de vue sont réalisées par une machine commandée par une unité de contrôle. Avantageusement, l'étape de réparation est réalisée par une machine commandée par une unité de contrôle, et ladite étape de réparation consiste en une sous-étape de programmation de la machine en fonction de la partie du décor à refaire et une sous-étape de dépose d'encre sur le support par la machine ainsi programmée.

Avantageusement, l'étape d'effaçage est réalisée par une machine commandée par une unité de contrôle.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 montre un algorithme d'un procédé d'impression selon l'invention, et
Fig. 2 est une représentation schématique d'un support peint à l'aide du procédé selon l'invention.

### EXPOSÉ DÉTAILLÉ DE MODES DE RÉALISATION

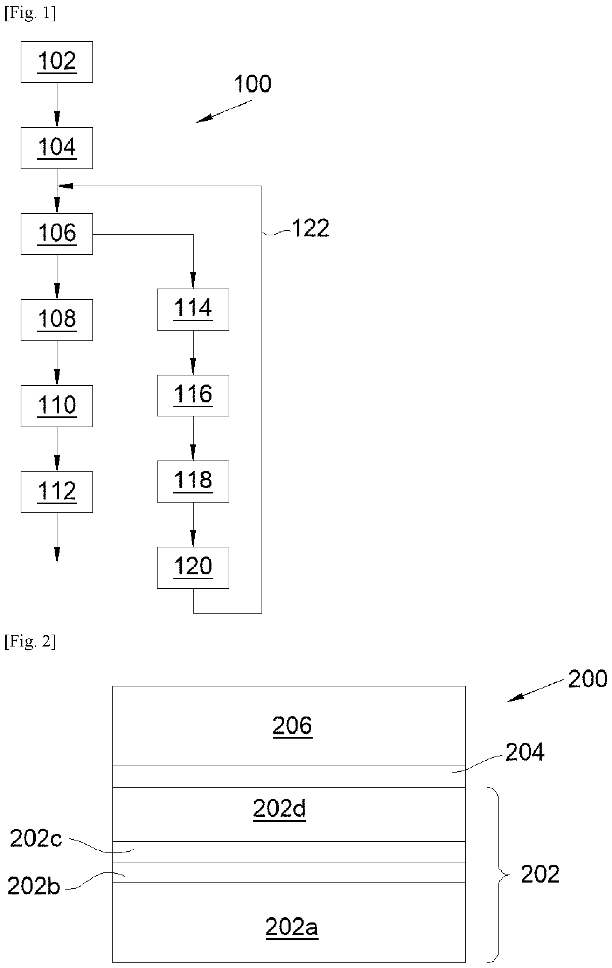

La Fig. 1 montre un algorithme d'un procédé d'impression 100 selon l'invention et la Fig. 2 montre un ensemble 200 comportant un support 202 sur lesquels ont été déposés de l'encre 204 et du vernis 206 par application du procédé d'impression 100 selon l'invention.

Dans le cadre de l'invention, le procédé d'impression 100 assure l'impression d'un décor sur le support 202. Ce décor est par exemple le logo d'une compagnie aérienne lorsque le support 202 constitue un panneau d'un fuselage d'aéronef.

Le procédé d'impression 100 permet ainsi d'imprimer un décor sur un support 202 à l'aide d'une encre 204 et plus particulièrement d'une encre qui durcit lorsqu'elle est soumise à un rayonnement ultra-violet (UV). Dans le mode de réalisation de l'ensemble 200, l'encre 204 recouvre entièrement le support 202, mais en fonction du décor à réaliser, l'encre 204 peut recouvrir uniquement une partie du support 202.

Le procédé d'impression 100 selon l'invention comprend ainsi :
- une étape d'application 102 au cours de laquelle l'encre 204 est déposée sur le support 202 pour former le décor, et
- une étape de gélification 104 au cours de laquelle l'encre 204 ainsi appliquée est soumise à un rayonnement UV de faible intensité.

L'étape d'application 102 est réalisée par un dispositif d'impression comportant une tête d'impression et préférentiellement une machine équipée d'au moins un axe actionné à une extrémité duquel est fixé le module d'impression. La tête d'impression est par exemple celle d'une imprimante du type imprimante à jet d'encre qui projette simultanément des gouttelettes d'encre de différentes couleurs à l'aide de buses de la tête d'impression et ceci en fonction des couleurs à obtenir. La machine peut être tout type de machine présentant au moins un axe commandable en position comme un robot équipé d'un bras.

L'étape de gélification 104 (« pinning » en langue anglosaxonne) consiste à exposer l'encre 204 à un rayonnement UV d'une intensité suffisante pour durcir partiellement l'encre 204 mais insuffisante pour la durcir entièrement. Les longueurs d'onde du rayonnement UV sont adaptées aux propriétés photochimiques de l'encre 204 et les gouttelettes d'encre 204 passent à un état de viscosité plus élevé, mais ne durcissent pas complètement. Dans cet état, les gouttelettes d'encre 204 sont figées pour éviter les coulures mais elles restent sensibles et peuvent être effacées par contacts et/ou par agressions chimiques.

Le procédé d'impression 100 se poursuit ensuite par une première étape de prise de vue 106 au cours de laquelle au moins une image du décor, dite première image, est prise, à l'aide d'un moyen de prise d'image tel qu'un scanner ou une caméra. Il est ainsi possible de prendre plusieurs images avec des contrastes différents.

La première image du décor ainsi prise est analysée au cours d'une première étape d'analyse 108. La première étape d'analyse 108 consiste par exemple à traiter la première image à l'aide d'un logiciel d'analyse d'images afin de déceler automatiquement un défaut comme des bavures, des absences d'encre, un désalignement des buses de la tête d'impression, un défaut de couleur, la présence de poussières, etc.

Bien sûr la première étape d'analyse 108 peut être réalisée directement par un technicien par analyse visuelle de la première image du décor.

Si aucun défaut n'est trouvé lors de la première étape d'analyse 108, le procédé d'impression 100 se poursuit par une étape de dépose 110 au cours de laquelle un vernis 206 est déposé sur l'encre 204. Ce vernis 206 est transparent et adapté à l'encre 204 utilisée, et il assure la protection de l'encre 204 par exemple contre les chocs.

Après mise en place du vernis 206, le procédé d'impression 100 se poursuit par une étape de solidification 112 au cours de laquelle l'encre 204 et le vernis 206 sont soumis à un rayonnement UV de forte intensité qui assure entre autres la solidification de l'encre 204 à travers le vernis 206. L'intensité du rayonnement UV doit être ici supérieure à celle utilisée lors de l'étape de gélification 104 et elle doit être suffisante pour durcir entièrement l'encre 204. Comme précédemment, les longueurs d'onde du rayonnement UV sont adaptées aux propriétés photochimiques de l'encre 204 et les gouttelettes d'encre 204 gélifiées passent à un état solide.

Le durcissement de l'encre 204 se fait sans contact avec l'oxygène de l'air qui est un inhibiteur de la réaction de durcissement et le taux de durcissement final est alors plus élevé que pour un durcissement au contact de l'air.

Selon un autre mode de réalisation de l'invention, l'étape de solidification 112 s'effectue juste avant l'étape de dépose 110 du vernis 206 sur l'encre 204, même si dans ce mode de réalisation, le durcissement de l'encre 204 se fait alors en contact avec l'oxygène de l'air.

Si un défaut est trouvé lors de la première étape d'analyse 108, le procédé d'impression 100 se poursuit par une étape d'effaçage 114 au cours de laquelle l'encre 204 est retirée sur une zone de retrait entourant le défaut. Cette étape d'effaçage 114 s'effectue de manière manuelle à l'aide d'un solvant approprié à l'encre 204 ou mécanique par exemple à l'aide d'un décapage laser. Si le défaut est constitué de bavures sur le bord du décor, la zone de retrait consiste en une zone qui contient le bord et les bavures.

Le procédé d'impression 100 se poursuit alors par une deuxième étape de prise de vue 116 au cours de laquelle au moins une image de ladite zone de retrait, dite deuxième image, est prise, à l'aide d'un moyen de prise d'image tel qu'un scanner ou une caméra comme pour la première étape de prise de vue 106.

Suite à la prise de la deuxième image, celle-ci est analysée au cours d'une deuxième étape d'analyse 118 pour déterminer la partie du décor à refaire, afin de remplacer le décor qui a été effacé de la zone de retrait. Cette analyse permet de déterminer par exemple les courbes à refaire, les couleurs à utiliser, ...

Après cette analyse, le procédé d'impression 100 se poursuit par une étape de réparation 120 au cours de laquelle l'encre 204 est déposée sur le support 202 pour former ladite partie du décor à refaire.

Le procédé d'impression boucle alors sur la première étape d'analyse 108 au cours d'une étape de retour 122 afin de poursuivre l'analyse du décor et valider l'impression au fur et à mesure.

Avec un tel procédé d'impression 100, l'encre 204 formant le décor est partiellement durcie pour la figer afin de permettre l'analyse du décor qui peut être corrigé si nécessaire avant la pose du vernis 206 et la solidification définitive.

Selon le matériau du support 202 et le type d'encre 204 utilisé, il peut être souhaitable que le support 202 comporte une plaque 202a dans un matériau métallique ou synthétique, une couche d'apprêt de base 202b déposée sur la plaque 202a, une couche d'apprêt extérieure 202c déposée sur la couche d'apprêt de base 202b et une couche de blanc 202d déposée sur la couche d'apprêt extérieur 202c et sur laquelle est déposée l'encre 204.

Même si le procédé d'impression 100 peut être mis en oeuvre manuellement par un technicien, comme expliqué ci-dessus, il est préférable qu'il soit mis en oeuvre à l'aide d'une machine équipée d'au moins un axe actionné portant la tête d'impression et le moyen de prise d'image et éventuellement le moyen mécanique de décapage. La machine, donc la tête d'impression, et le moyen de prise d'image et éventuellement le moyen mécanique de décapage sont commandés par une unité de contrôle.

Selon un mode de réalisation particulier, l'étape d'application 102, la première étape de prise de vue 106, et la deuxième étape de prise de vue 116 sont réalisées par la machine commandée par l'unité de contrôle où le moyen de prise d'image transfert les images directement à l'unité de contrôle qui peut les analyser. La machine porte alors le moyen de prise d'image.

Selon un mode de réalisation particulier, l'étape de réparation 120 est réalisée par la machine commandée par l'unité de contrôle, et l'étape de réparation 120 consiste en une sous-étape de programmation de la machine en fonction de la partie du décor à refaire et une sous-étape de dépose d'encre 204 sur le support 202 par la machine ainsi programmée. L'unité de contrôle détermine, entre autres, les positions que la tête d'impression doit prendre pour réparer la partie du décor à refaire, la trajectoire que doit suivre la tête d'impression, les couleurs qui doivent être utilisées et où elles doivent être déposées, etc.

Selon un mode de réalisation particulier, l'étape d'effaçage 114 est réalisée par la machine commandée par l'unité de contrôle.

Selon un mode de réalisation particulier, l'unité de contrôle comprend, reliés par un bus de communication : un processeur ou CPU (« Central Processing Unit » en anglais) ; une mémoire vive RAM (« Random Access Memory » en anglais) ; une mémoire morte ROM (« Read Only Memory » en anglais), par exemple une mémoire Flash ; un dispositif de stockage de données, tel qu'un disque dur HDD (« Hard Disk Drive » en anglais), ou un lecteur de support de stockage, tel qu'un lecteur de cartes SD (« Secure Digital » en anglais) ; au moins une interface de communication COM et/ou un ensemble d'entrée-sortie I/O («Inputs/Outputs » en anglais).

L'interface de communication COM et/ou un ensemble d'entrée-sortie I/O permet à l'unité de contrôle d'interagir avec la machine, la tête d'impression, le moyen de prise d'image, etc.

Le processeur est capable d'exécuter des instructions chargées dans la RAM à partir de la ROM, d'une mémoire externe, d'un support de stockage, tel qu'une carte SD, ou d'un réseau de communication. Lorsque l'unité de contrôle est mise sous tension, le processeur est capable de lire de la RAM des instructions et de les exécuter. Ces instructions forment un programme d'ordinateur causant une implémentation, par le processeur, des comportements, étapes et algorithmes décrits ici.

Tout ou partie des comportements, étapes et algorithmes décrits ici peut ainsi être implémenté sous forme logicielle par exécution d'un ensemble d'instructions par une machine programmable, telle qu'un DSP (« Digital Signal Processor » en anglais) ou un microcontrôleur, ou être implémenté sous forme matérielle par une machine ou un composant (« chip » en anglais) dédié ou un ensemble de composants (« chipset » en anglais) dédié, tel qu'un FPGA (« Field-Programmable Gate Array » en anglais) ou un ASIC (« Application-Specific Integrated Circuit » en anglais). D'une manière générale, l'unité de contrôle constitue un système sous forme de circuiterie électronique agencée et configurée pour implémenter les comportements, étapes et algorithmes décrits ici.

## Revendications

1. Procédé d'impression (100) d'un décor sur un support (202) à l'aide d'une encre (204) qui durcit sous rayonnement ultra-violet (UV), ledit procédé d'impression (100) comprenant :
- une étape d'application (102) au cours de laquelle ladite encre (204) est déposée sur le support (202) pour former le décor,
- une étape de gélification (104) au cours de laquelle l'encre (204) ainsi appliquée est soumise à un rayonnement UV de faible intensité pour durcir partiellement l'encre (204),
- une première étape de prise de vue (106) au cours de laquelle au moins une première image du décor est prise,
- une première étape d'analyse (108) au cours de laquelle la première image du décor ainsi prise est analysée pour déceler des éventuels défauts,
si aucun défaut n'est trouvé, le procédé d'impression (100) continue par :
- une étape de dépose (110) au cours de laquelle un vernis (206) est déposé sur l'encre (204), et
- une étape de solidification (112) au cours de laquelle l'encre (204) et le vernis (206) sont soumis à un rayonnement UV de forte intensité pour durcir entièrement l'encre (204),
si un défaut est trouvé, le procédé d'impression (100) continue par :
- une étape d'effaçage (114) au cours de laquelle l'encre (204) est retirée sur une zone de retrait entourant le défaut,
- une deuxième étape de prise de vue (116) au cours de laquelle au moins une deuxième image de ladite zone de retrait est prise,
- une deuxième étape d'analyse (118) au cours de laquelle ladite deuxième image est analysée pour déterminer la partie du décor à refaire,
- une étape de réparation (120) au cours de laquelle ladite encre (204) est déposée sur le support (202) pour former ladite partie du décor à refaire, et
- une étape de retour (122) au cours de laquelle le procédé d'impression (100) boucle sur la première étape d'analyse (108).

2. Procédé d'impression (100) selon la revendication 1, **caractérisé en ce que** l'étape de solidification (112) s'effectue juste avant l'étape de dépose (110) du vernis (206) sur l'encre (204).

3. Procédé d'impression (100) selon l'une des revendications 1 ou 2, **caractérisé en ce que** l'étape d'application (102), la première étape de prise de vue (106), et la deuxième étape de prise de vue (116) sont réalisées par une machine commandée par une unité de contrôle.

4. Procédé d'impression (100) selon l'une des revendications 1 à 3, **caractérisé en ce que** l'étape de réparation (120) est réalisée par une machine commandée par une unité de contrôle, et **en ce que** ladite étape de réparation (120) consiste en une sous-étape de programmation de la machine en fonction de la partie du décor à refaire et une sous-étape de dépose d'encre (204) sur le support (202) par la machine ainsi programmée.

5. Procédé d'impression (100) selon l'une quelconque des revendications précédentes, **caractérisé en ce que** l'étape d'effaçage (114) est réalisée par une machine commandée par une unité de contrôle.
